# EUROPEAN PATENT SPECIFICATION

(11) **EP 4 014 700 B1**
(45) Date of publication and mention of the grant of the patent: **08.10.2025**
(21) Application number: 20747431.3
(22) Date of filing: 04.08.2020
(51) Int. Cl.: F21V 23/04, H05B 47/19, H05B 45/10, G06F 3/01, H05B 47/105, H05B 47/175

(54) **SYSTEM AND METHODS TO PROVIDE IMMERSIVE LIGHTING INTERACTION**
SYSTEM UND VERFAHREN ZUR BEREITSTELLUNG VON IMMERSIVEN BELEUCHTUNGSINTERAKTION
SYSTÈME ET PROCÉDÉS POUR FOURNIR UNE INTERACTION D'ÉCLAIRAGE IMMERSIVE

(30) Priority: 12.08.2019 US 201962885625 P; 07.10.2019 EP 19201682
(43) Date of publication of application: 22.06.2022
(73) Proprietor: Signify Holding B.V., 5656 AE Eindhoven (NL)
(72) Inventor: ZANG, Yizhou, 5656 AE Eindhoven (NL); KUMAR, Rohit, 5656 AE Eindhoven (NL); YIN, Ruohua, 5656 AE Eindhoven (NL); DARIE, Alexandru, 5656 AE Eindhoven (NL); MAHONEY, Andrew, 5656 AE Eindhoven (NL); HUANG, Yuming, 5656 AE Eindhoven (NL)
(74) Representative: Verweij, Petronella Daniëlle
(86) International application number: PCT/EP2020/071894
(87) International publication number: WO 2021/028265

(56) References cited:
- EP-A1- 3 517 839
- WO-A1-2015/051046
- WO-A1-2019/016764
- CA-A1- 2 777 482
- US-A1- 2014 247 132
- US-A1- 2015 254 570
- US-A1- 2016 286 625
- US-A1- 2017 293 349

## Description

### FIELD OF THE INVENTION

The invention relates to systems and methods for controlling a lighting infrastructure by a plurality of users based on sensor data received by user's mobile devices.

### BACKGROUND

Lighting infrastructures such as bridges, buildings, monuments, or other large-scale structures, are made up of multiple lighting devices. A lighting controller communicates with the lighting infrastructure to control each lighting device. To control a lighting infrastructure, a user manipulates controls using a traditional input mechanism such as a touch screen or other curser of a client device. This requires a user to view a user interface and manipulate one or more user interface controls. This may involve a graphic user interface (GUI) that includes buttons, sliders, switches, checkboxes, menus, or text fields that allow a user to input his or her input control. The drawback to this approach is it requires the user to draw attention away from other activities and focus on the GUI. When a user is focused on viewing the user interface of the client device, the user cannot enjoy his or her environment. There exist systems that address the situation for controlling a lighting infrastructure that does not require the user to view a GUI.

The prior art lacks the ability to allow a user to control a lighting infrastructure without the use of a GUI. For example, prior art systems allow a user to reserve a timeslot to manipulate a lighting infrastructure. Once a reservation is made, the user, using a mobile application installed on a client device, can manipulate a touch screen to change the lighting controls of a lighting infrastructure such as, for example, the color or intensity of lights. Specifically, the user may touch, and thereby select, a particular color displayed on a GUI generated by the mobile application to control the lighting infrastructure to display the selected color. Such solutions require the user to manipulate a GUI to control the lighting infrastructure.

Other prior art systems include a lighting infrastructure that is controlled by pre-programmed animation sequences. Here, no user input is required. Rather, a particular sequence that is stored in computer memory is read and converted into a lighting signal to control the lighting infrastructure. In other prior art, more sophisticated lighting controls are based on real-time data, including, for example, weather data. Weather data obtained over a network is converted into a corresponding lighting control. Such solutions, however, permit no user interaction.

The present disclosure overcomes the problems in the prior art by providing an immersive lighting experience where a GUI is not used to control a lighting infrastructure. The present disclosure also includes embodiments allowing group behavior to control a lighting infrastructure.

US 2015/254570 A1 discloses systems and methods for probabilistic semantic sensing in a sensory network and relates to multiple sensors that may be used to sense and identify objects. The objects that are being sensed may include people, vehicles, or other entities. An entity may be stationary or in motion. Sometimes a sensor may not be positioned to fully sense the entire entity. Other times an obstruction may impair the sensing of the entity. In both instances, real world impairments may lead to unreliable results, which the disclosed systems and methods try to address.

US 2016/286625 A1 discloses techniques and architecture for gesture-based control of lighting systems. In some cases, the lighting system may include a camera and/or other suitable componentry to interpret gestures made by a user for controlling light output. In some such cases, the gesture performed and/or the location of the gesture may determine how the light output is controlled. In some cases, the gestures may be performed by moving a mobile computing device, such as a smartphone, tablet, or dedicated light controller device. In some such cases, sensors included in or otherwise operatively coupled to the computing device (gravitational sensors, accelerometers, gyroscopic sensors, etc.) may be used to detect the movement of the device and the related gestures. The gestures may be used to navigate a user interface that allows a user to control light output by adjusting different attributes of the light output, such as light intensity and color.

WO 2015/051046 A1 discloses an apparatus including a movement sensor and processing unit, where sensed movement, especially velocity and/or acceleration and changes thereof, is used to control real and/or virtual objects, where no hard selection protocol is used and output signals and/or commands occur with a change in velocity or acceleration. The object may be a lighting fixture and the disclosed apparatus may be used to control the lighting in a building.

### SUMMARY OF THE INVENTION

One aspect disclosed herein is related to an immersive group lighting experience where group behavior is translated into a control signal to control a lighting infrastructure. According to an example, a computing system is configured to receive a plurality of classifications from a plurality of client devices, determine whether a type of the received classification exceeds a threshold amount, and send a control signal to the lighting controller to control the lighting infrastructure according to the control signal that corresponds to the type of received classification.

The invention is defined by the claims wherein claim 1 is directed to a lighting infrastructure control system for controlling a lighting infrastructure, claim 9 is directed to an immersive lighting system, and claim 10 is directed to a computer-implemented method for controlling a lighting infrastructure.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the figures, elements which correspond to elements already described may have the same reference numerals. In the drawings,
Fig. 1 schematically shows an example of an embodiment of an immersive lighting system,
Fig. 2 schematically shows an example of communication between a client device and a computing system in an embodiment of the immersive lighting system of Fig. 1,
Fig. 3 depicts various data that is transmitted and calculated in an embodiment of the immersive lighting system of Fig. 1,
Fig. 4 depict an example of a classifier in an embodiment of the immersive lighting system of Fig. 1,
Fig. 5 depicts data used for analyzing group behavior in an embodiment of the immersive lighting system of Fig. 1,
Fig. 6 schematically shows an example of communication between a lighting controller and a computing system in an embodiment of the immersive lighting system of Fig. 1,
Fig. 7a is a flowchart illustrating an example of the functionality performed by a client device in an embodiment of the immersive lighting system of Fig. 1,
Fig. 7b is a flowchart illustrating an example of the functionality performed by a computing system in an embodiment of the immersive lighting system of Fig. 1,
Fig. 8 schematically shows an embodiment of a computing system in the immersive lighting system of Fig. 1, and
Fig 9 a schematically shows an embodiment of a client device in the immersive lighting system of Fig. 1.

### DETAILED DESCRIPTION OF PREFERRED EMBODIMENTS

The embodiments shown in the drawings and described in detail herein should be considered exemplary of the principles of the invention and not intended to limit the invention to the specific embodiments shown and described herein.

In the following, for the sake of understanding, elements of embodiments are described in operation. However, it will be apparent that the respective elements are arranged to perform the functions being described as performed by them.

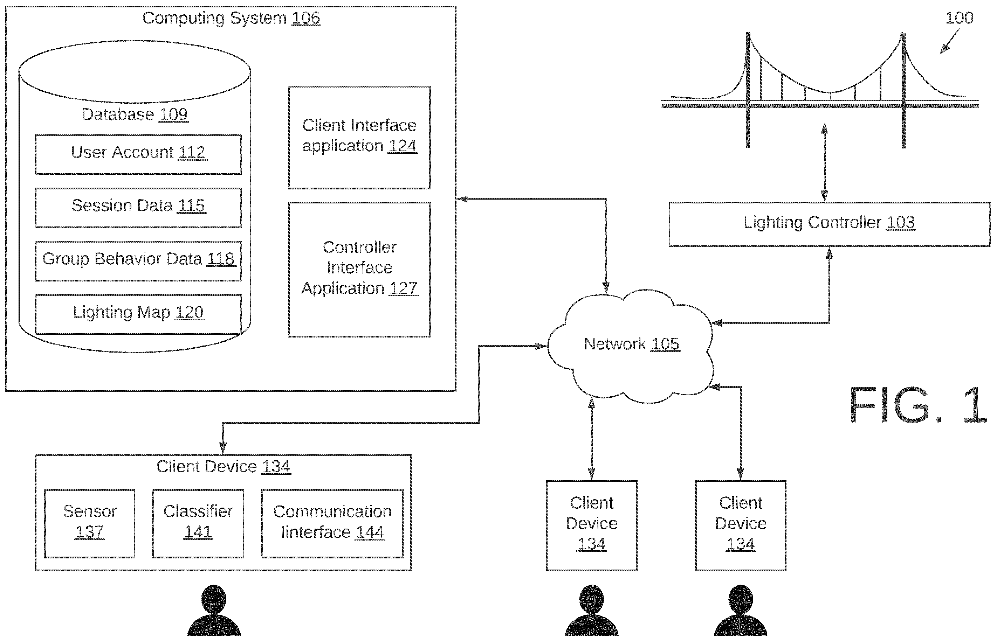

Fig. 1 schematically shows an example of an embodiment of an immersive lighting system. Fig. 1 depicts a networked environment that includes a lighting infrastructure 100 that is controlled by a lighting controller 103. The lighting infrastructure 100 may be a bridge, building, monument, stadium, arena, or other large scale structure. The lighting infrastructure 100 is made up of multiple lighting devices. A lighting device includes one or more light sources such as, for example, a light emitting devices (LED). Each lighting device can be grouped together and controlled as a group. Each lighting device is installed within the lighting infrastructure 100 to provide lighting at a large scale. The lighting controller 103 may be a device that controls each lighting device installed in the lighting infrastructure. In this respect, the lighting controller 103 communicates with the lighting devices of the lighting infrastructure using any communication protocol.

The lighting controller 103 communicates with other system components over a network 105. The network 105 includes the Internet, intranets, extranets, wide area networks (WANs), local area networks (LANs), wired networks, wireless networks, or other suitable networks, etc., or any combination of two or more such networks.

The immersive lighting system of Fig. 1 further includes a computing system 106 connected to the network 105. The computing system 106 may comprise, for example, a server computer or any other system providing computing capability. Alternatively, the computing system 106 may employ a plurality of computing devices that may be arranged, for example, in one or more server banks or computer banks or other arrangements. Such computing devices may be located in a single installation or may be distributed among many different geographical locations. For example, the computing system may include a plurality of computing devices that together may comprise a hosted computing resource, a grid computing resource and/or any other distributed computing arrangement. In some cases, the computing system 106 may correspond to an elastic computing resource where the allotted capacity of processing, network, storage, or other computing-related resources may vary over time. The computing system 106 may implement one or more virtual machines that use the resources of the computing system 106.

The computing system 106 includes a database 109. Various data is stored in the database 109 or other memory that is accessible to the computing system 106. The database 109 may represent one or more databases 109. The data stored in the database 109 includes user accounts 112, session data 115, group behavior data 118, and a lighting map 120. A user account 112 includes information about a user including a user name, password, authentication information, and/or login credentials. The purpose of the user account 112 is to register users who intend to access the immersive lighting system for controlling the lighting infrastructure 100. In this respect, the user account 112, provides information to authenticate and authorize users who wish to access the system. Session data 115 includes information about active sessions established with the immersive lighting system. Group behavior data 118 includes real-time information about a plurality of users to make determinations relating to how to control the lighting infrastructure 100. The lighting map 120 includes information that clusters together one or more LEDs of the lighting infrastructure 100 to a corresponding cluster identifier so that each LED can be independently controlled. For example, a control signal to control the lighting infrastructure 100 such that it is applied only to a cluster identifier, thereby controlling one or more LEDs independently.

Various applications and/or other functionality may be executed in the computing system 106. This includes, for example, a client interface application 124 and a controller interface application 127. The client interface application 124 provides an interface to client devices, as described below. The controller interface application 127 provides an interface to the lighting controller 103.

As mentioned above, also connected to the network 105 are a plurality of client devices 134 operated by different users. The client device 134 is portable so that it can be carried by a user and easily transported to a lighting infrastructure 100. A client device may be, for example, a mobile phone, tablet, a wearable device (e.g., a wristwatch), or any other portable, mobile device that serves as a client. The client device 134 includes a sensor 137, a classifier 141, and a communication interface 144. The sensor may be a wireless accessory to the client device 134 or it may be integrated into the housing of the client device 134. The sensor may be a motion sensor, heat sensor, microphone, light sensor, camera, or biometric sensor. The classifier 141 may include a software component that analyzes sensor data and classifies it based on detecting patterns. The communication interface 144 allows the client device 134 to communicate with the computing system 106 over the network 105. The client device 134 is configured to control the lighting infrastructure 100 by way of communicating with the computing system, which communicates with the lighting controller 103.

Next is a description of how the various components of Fig. 1 are configured to implement a group lighting system. A user using a client device 134 wishes to interact with the lighting infrastructure 100. For example, if the lighting infrastructure is installed in a stadium that hosts a sporting event, the user may desire to control the stadium lighting to reflect the user's mood. Depending on how the user moves the client device, the lighting infrastructure 100 changes the lighting recipe. Different motions correspond to different lighting animations or different lighting control instructions such as, for example, altering color, hue, intensity, brightness, etc. Allowing a user to control a lighting infrastructure 100 without using traditional inputs, such as a touch screen control, achieves an immersive experience.

A session between the computing system 106 and the user is established and the occurrence of that session is stored as session data 115. A session may be established by the client device 134 requesting permission. The computing system 106 may invite the client device 134 submit a request.

In an example, once a session is established, the client device 134 is configured to send a control instruction to control the lighting infrastructure 100, where the control instruction is derived from sensor data. In this case, the sensor 137 of the client device 134 generates sensor samples. These sensor samples are analyzed by a classifier 141 to generate a classification. The type of classification is mapped to a corresponding control instruction. The communication interface 144 of client device 134 sends the control instruction to the client interface application 124 of the computing system 106. The computing system 106 interprets the control instruction and generates a corresponding control signal. The controller interface application 127 of the computing system 106 transmits the control signal the lighting controller 103 so that one or more LEDs of the lighting infrastructure 100 are controlled according to the control instruction originating from the client device 134.

According to another embodiment, the immersive experience may be an immersive group experience where group behavior dictates how the lighting infrastructure 100 is controlled. Synchronous group behavior may trigger lighting changes in the way the lighting infrastructure 100 displays light.

In this embodiment, the computing system 106 communicates with a plurality of client devices 134. Each client device 134 includes a sensor that generates sensor data. The sensor data from each client device 134 is classified using the respective classifiers 141. The classifications resulting from the classifiers 141 are transmitted to the client interface application 124. These classifications are stored as group behavior data 118. The computing system 106 analyzes the group behavior data to determine if a threshold amount of classifications of sensor data from a plurality of client devices is met. For example, a classifier 141 may be configured to classify motion sensor data into several classifications, one of which includes the motion of standing up. If a quantification of the type of classifications for a "standing up" motion received by the computing system 106 exceeds a threshold amount, then the computing system may send a corresponding control signal to the lighting controller so that the lights of the lighting infrastructure 100 are controlled in a corresponding manner. In this respect, the classifications may be quantified by the number of a particular type of classification received for a duration of time, a percentage of a particular type of classification based on all classifications received, or the frequency, periodicity, or rate that a particular type of classification is received for a duration of time.

Functionality described as being performed locally (e.g., in a client device 134) may be distributed to being performed remotely (e.g., by the computing system 106). For example, the classifier 141 may be implemented in the computing system 106 instead of the client device 134. In this case, the client device 134 transmits sensor data to the computing system 106 for subsequent classification. Alternatively, the classification of sensor data may be initially performed by a client-side classifier 141 and then completed by a classifier residing in the computing system 106.

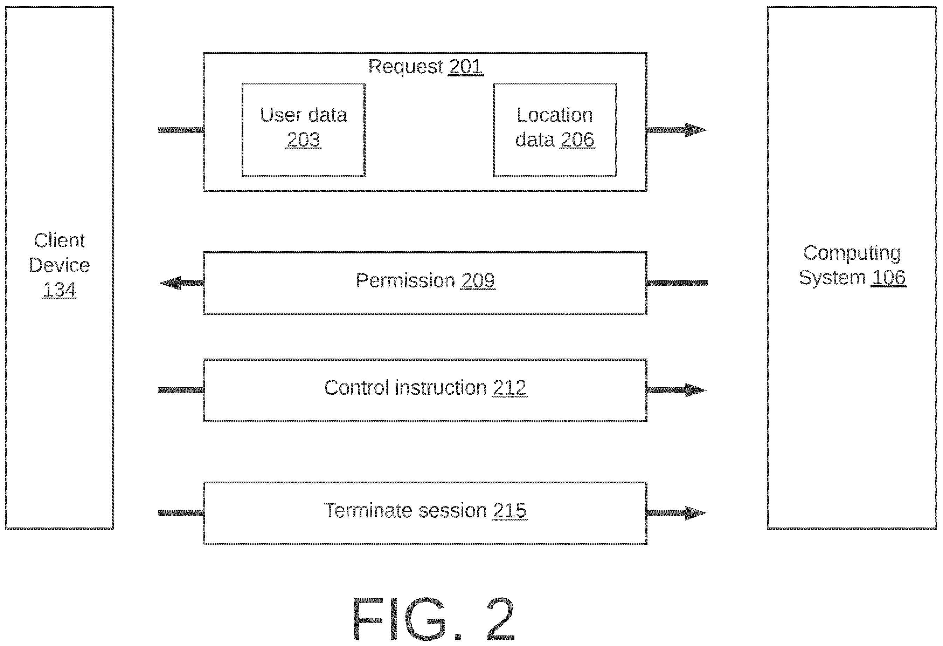

Fig. 2 schematically shows an example of communication between a client device 134 and a computing system 106 in the immersive lighting system of Fig. 1. A client device 134 sends a control request 201 to computing system 106. According to an embodiment, the control request 201 includes user data 203 and location data 206. The user data 203 may include information identifying the user of the client device 134, such as, for example, a user identifier. Location data 206 may include location coordinates of the client device 134 that submitted the control request 201. For example, the client device 134 may include a location module that obtains location coordinates or a relative location of the client device 134. The location module may be a Global Navigation Satellite System (GNSS) module to obtain geographic coordinates. The location module may be configured to detect the distance or relative location with respect to the lighting infrastructure 100. When submitting the control request 201, the client device 134 accesses the location module to embed the location coordinates or location data into the control request 201. Although Fig. 2 shows the client device 134 sending the request 201, the control request 201 may be solicited by the computing system 106.

When the computing system 106 receives the control request 201, the computing system 106 may authenticate the request. For example, the computing system 106 cross references user accounts 112 with the user data 203 to determine whether the client device 134 that submitted the control request 201 is associated with an authorized user. Thus, the computing system 106 obtains information about the user who submitted the control request 201.

Upon authenticating the user, the computing system 106 transmits a permission 209 to the client device 134. The permission 209 authorizes the client device 134 to submit subsequent control instructions 212 to the computing system 106. By granting a client device permission 209, a session is established and session data 115 is updated accordingly. During the session, one or more control instructions 212 are submitted by the client device 134. Alternatively, when controlling the lighting infrastructure 100 using group behavior, the computing system 106 may derive one or more control instructions 212 based on classifications of sensor data received from a plurality of client devices 134. As described in more detail below, the control instructions 212 are derived from sensor data as opposed to a user manipulating a GUI.

For example, depending on how the sensor 137 senses the way the user moves the client device 134, a corresponding control instruction 212 is generated. For example, moving the sensor 137 upwards increases the intensity while moving it downwards reduces the intensity. The sensor 137 may generate a motion sensor output that is classified by a classifier 141 to generate a corresponding control instruction 212.

In another embodiment, the sensor is a camera and the control instruction 212 is derived from an output of the camera. For example, a facial recognition or pattern recognition program may be applied to a digital image obtained from the camera to generate a corresponding control instruction 212. For example, smiling may correspond to a turn-on-light control instruction while frowning may correspond to a turn-off-light control instruction.

The client device 134 may submit one or more control instructions 212 as long as a session persists. In one example, the user may end the session and transmit a terminate session message 215 to the computing device. After a session is terminated, the computing system 106 does not process any subsequent control instructions 212 from the client device 134 unless a new session is established.

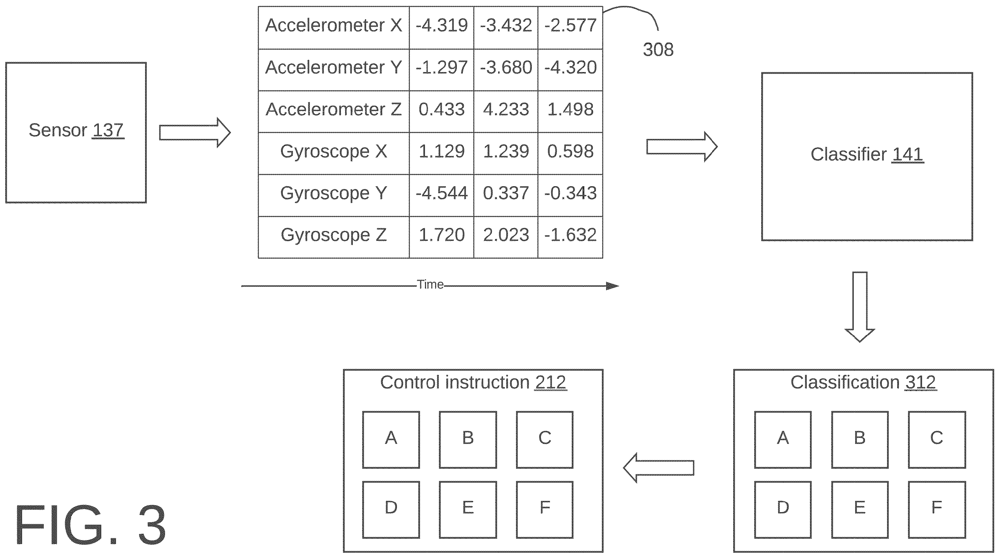

Fig. 3 depicts various data that is transmitted and calculated in an example of the immersive lighting system of Fig. 1. Fig. 3 shows an example of a client device 134 that receives sensor data from a sensor 137 to generate a classification 312 and corresponding control instruction 212.

A sensor 137 converts physical inputs such as, for example, light, movement, heat, or electricity, into computer readable sensor data. The sensor data may be formatted as a series of sensor samples 308 where each sample time includes one or more sensor readings. The example of Fig. 3 shows a motion sensor 137 that generates motion sensor samples 308 on a periodic basis. A motion sensor sample 308 may include an accelerometer reading along a particular axis (e.g., x-axis, y-axis, z-axis) and/or a gyroscope reading along a particular axis (e.g., x-axis, y-axis, z-axis).

The client device 134 includes a classifier 141 that receives sensor data such as a stream of sensor samples 308. The classifier 141 is configured to analyze the sensor samples 308 and generate a classification 312. In this respect, the classifier 141 determines whether the sample data matches one among a finite set of classifications. In the case of a motion sensor 137, the classifier 141 may be may be configured to determine if the sensor samples 308 correspond to a motion classification 312 such as an upward motion, a downward motion, a shaking motion, a clockwise rotation, a counter clockwise rotation, a side-to-side motion, *etc.* The example of Fig. 3 shows six different classifications of the sample data, A through F. In the event that the sample data does not match a predefined classification 312, then the classifier 141 determines that no classification exists for the analyzed sample data.

Next, the client device 134 maps a determined classification 312 to a corresponding control instruction 212. According to an example, the client device 134 stores a map that translates the classification 312 to a control instruction 212. In this respect, Classification A maps to Control Instruction A, Classification B maps to Control Instruction B, etc. To illustrate, Classification A may be an upward motion and Classification B may be a downward motion. Control Instruction A may be an instruction to increase light intensity and Control Instruction B may be an instruction to decrease light intensity. When the sensor moves upwards, an instruction to increase light intensity is generated and when the sensor moves downwards, an instruction to decrease light intensity is generated. A user may manipulate the client device 134 to generate control instructions that correlate with movement.

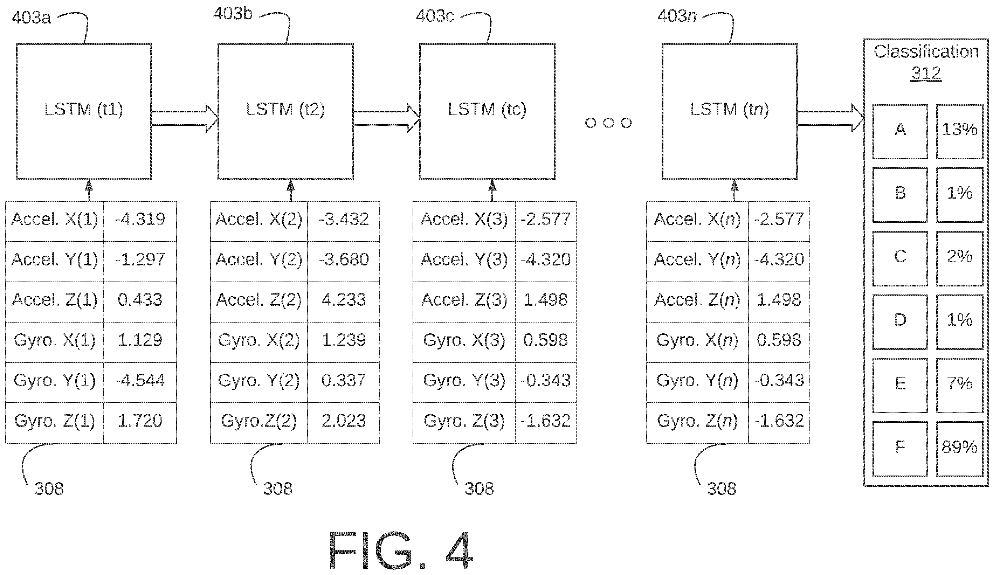

Fig. 4 depict an examples of a classifier 141 in an embodiment of the immersive lighting system of Fig. 1. Fig. 4 shows an embodiment of implementing the classifier 141 as a Long Short-Term Memory (LSTM) classifier 141. The LSTM classifier 141 is trained with training data made up of sets of training samples.

The LSTM classifier 141 is made up of a plurality of LSTM cells 403a-n. The first LSTM cell feeds its output to the next LSTM cell in the series. Each LSTM cell 403 receives a corresponding sensor 308 sample from a series of sensor samples 308 as a raw input. If the LSTM classifier 141 is configured to analyze ten samples (*e.g., n=*10), to make a classification determination, then ten LSTM cells 403 are used, each LSTM cell receives a corresponding sensor sample 308. The number of LSTM cells (n) may be selected based on the longest time series in the training data.

The output of the LSTM classifier 141 is analyzed to generate the probabilities that the inputted sensor samples falls within each of the classifications. As shown in Fig. 4, each classification 312, labeled A-F has a corresponding probability score. The probability score indicates how likely the sensor samples 308 inputted into the classifier 141 fall within a classification 312. Fig. 4 shows an example where Classification F has the highest probability score of 89% while the other classifications 312 have significantly smaller scores. When the probability score exceeds a threshold score, the corresponding classification 312 is applied to the inputted sensor samples 308.

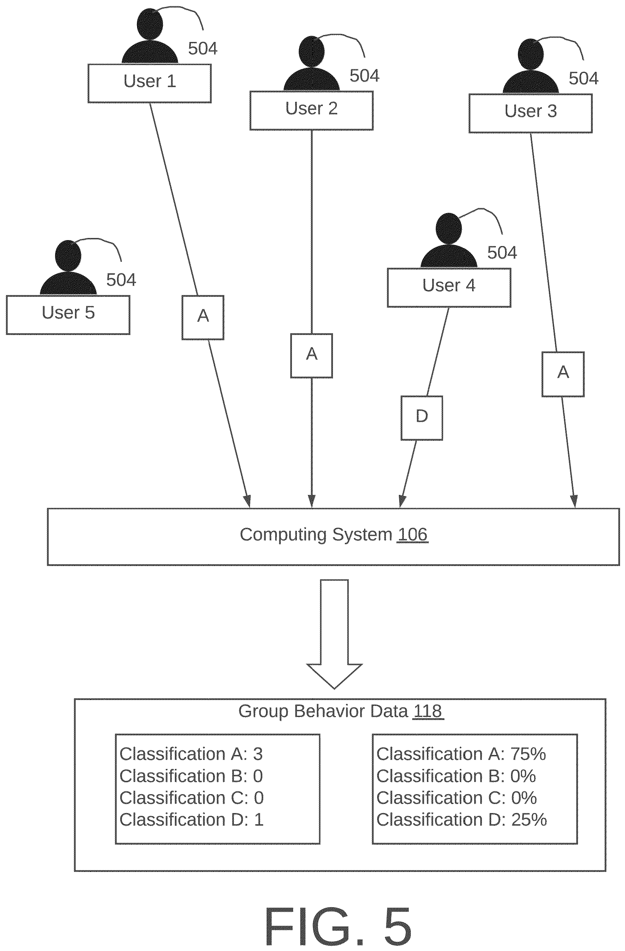

Fig. 5 depicts data used for analyzing group behavior in an embodiment of the immersive lighting system of Fig. 1. Fig. 5 shows an embodiment where a computing system 106 is configured to analyze group behavior to create an immersive group lighting experience. In this embodiment, a computing system 106 communicates with a plurality of client devices 134 operated by respective users 504. Each client device 134 includes a sensor 137 that sends sensor data to the classifier 141 residing in the client device 134. The classifier 141 generates a classification 312.

After a client device 134 determines a classification 312, the classification is transmitted to the computing system 106. The example of Fig. 5 shows five users. Users 1, 2, and 3, each independently generate a classification 312 of their respective sensor data, which all corresponds to the same classification 312 labeled as Classification A. This means that Users 1, 2, 3, have exhibited a similar behavior captured by their respective sensors 137. User 4 generates a different classification 312 labeled as Classification D. This means that User 4's behavior is different from Users 1-3. User 5 does not generate a classification. This may be because there is no sensor data to analyze or the analyzed sensor data does not fall within a classification 312.

As shown in Fig. 5, classifications 312 are received asynchronously from different users over a varying period of time. The classifications 312 are received and stored as group behavior data 118. Group behavior may be collected for varying windows of time and analyzed. For a particular window of time, the computing system 106 records classifications received from a plurality of users 504 and stores the classifications as group behavior data 118. This group behavior data 118 is analyzed to provide metrics such as the frequency of a particular type of classification. In the example of Fig. 5, for a particular window of time, Classification A occurred three times, Classification B and C did not occur, and Classification D occurred once. The group behavior data 118 may also represent the received classifications in terms of percentages to show their relative frequency. Here Classification A occurred 75% of the time among all classifications 312 received for a particular window of time. The computing system 106 generates a control signal based on group behavior data 118. For example, the control signal may map to Classification A, which has the highest relative frequency. In other embodiments, a threshold value is applied to generate a control signal. For example, if a classification type exceeds a threshold frequency, then a control signal that maps to that classification type is generated. If a threshold frequency is 70%, then a control signal that maps to Classification A may be generated because Classification A has a frequency of 75%. As another example, if the occurrence of a particular classification type exceeds a threshold count, then a corresponding control signal is generated. If a threshold count is ten, then no control signals are generated if the count of the most frequency classification type falls below ten. The use of a threshold amount (e.g., threshold frequency or threshold count), may encourage more users to interact with the immersive lighting system or modify the way the interact with their client devices 134.

To elaborate on this example further, the computing system 106 determines whether a type of the received classification exceeds a threshold amount. For example, the threshold amount may be a predetermine number of a particular classification type received within a window of time. The threshold may also be defined in terms of a percentage. For example, the threshold amount is characterized as whether there is at least 50% of the received classifications 312 are of a particular type.

If the type of the received classification exceeds a threshold amount, the computing system 106 determines a corresponding control signal that maps to the type of classification. Then the computing system 106 sends the control signal to a lighting controller 103 to control the lighting infrastructure 100 according to the control signal.

Fig. 5 depicts an embodiment that may take place in a sports arena. Each client device 134 may classify motion according to a finite set of classifications 312. One classification 312 may correspond to a "stand-up" motion where a user stands up while another classification may corresponding to a "sit-down" motion where a user sits down. Upon detecting these classified motions, the client device 134 transmits the classification 312 to the computing system 106. The computing system 106 receives and stores the classifications 312 as group behavior data 118. If the number of classifications of a particular type exceeds a threshold amount, a corresponding control signal is generated. For example, if the group behavior is suggesting that many people are standing up, the corresponding control signal may be to play a predefined animation sequence, to increase the light intensity, or to alter the color output. This may encourage users to be more engaged as a group in order to affect the way the lighting infrastructure 100 outputs light.

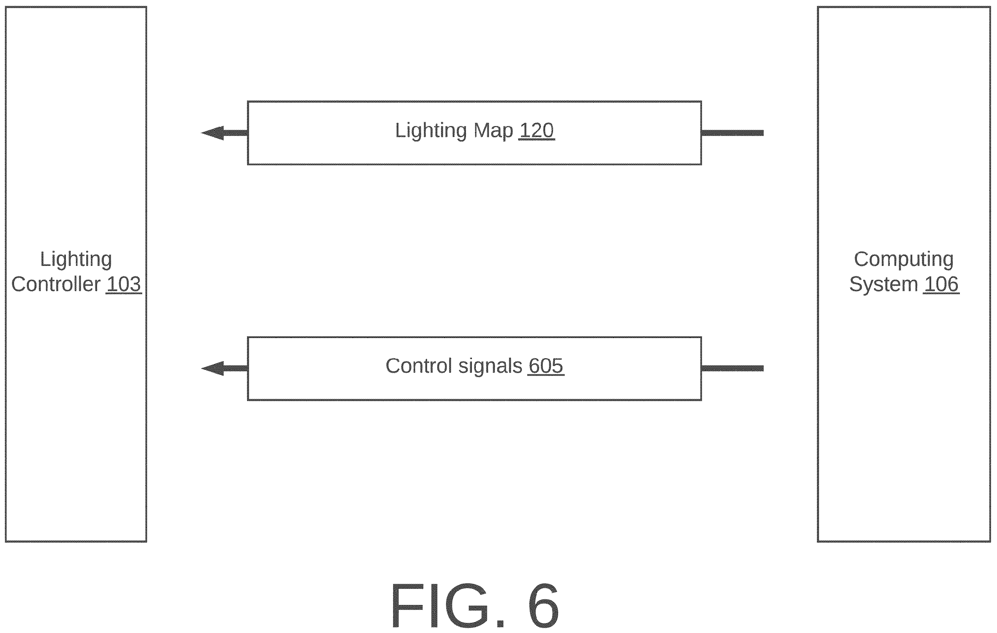

Fig. 6 schematically shows an example of communication between a lighting controller 103 and a computing system 106 in an embodiment of the immersive lighting system of Fig. 1. The computing system 106 may store a static or dynamically generated lighting map 120. The lighting map is transmitted to the lighting controller 103 to enable the lighting controller 103 to map received control signals 605 to particular lights or clusters of lights. For example, if the lighting infrastructure 100 is installed in a stadium, which is divided into twenty sections, the lighting map 120 may organize each light in the lighting infrastructure 100 into a designated section. This allows the lighting infrastructure 100 to have lights that are independently controlled. If there is an update to the lighting map 120, the updated lighting map 120 is transmitted to the lighting controller 103.

As previously described the computing device 106 receives a control instruction 212 from a particular client device 134 and then generates a corresponding control signal 605 to instruct the lighting infrastructure 100 according to the control instruction 212. In this respect, the control signal 605 is a transmission that embodies the control instruction 212 originating from a client device 134. The control signal 605 may also be generated by the computing system 106 based on group behavior data 118.

In addition to specifying how to control the lights, the control signal 605 includes the identities of the lights that should be controlled. Upon receiving a control signal 605, the lighting controller 103 applies the control signal 605 to the lights identified in the control signal using the lighting map 120.

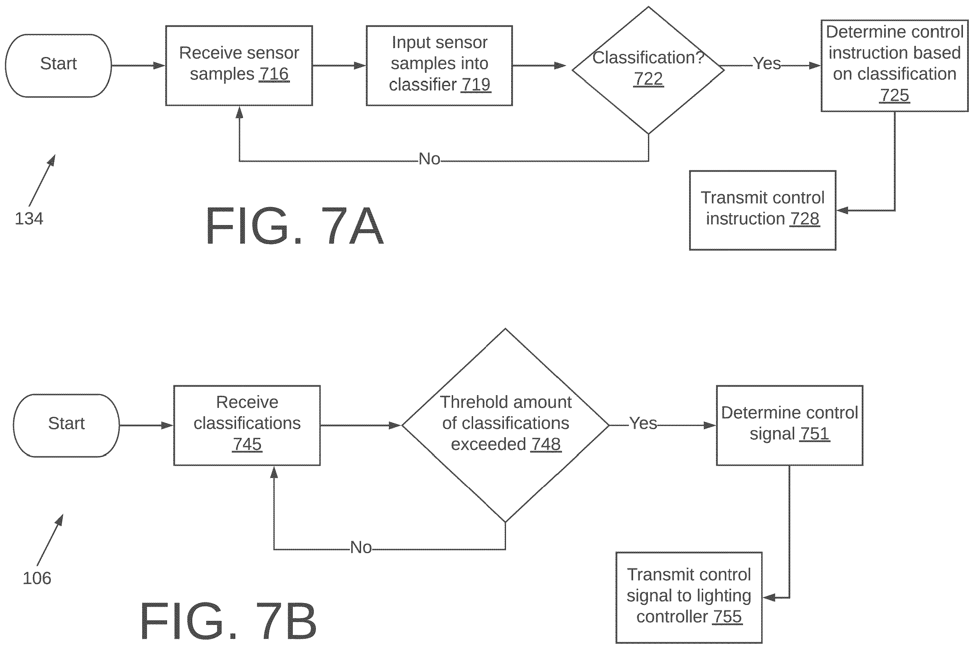

Fig. 7a is a flowchart illustrating an example of the functionality performed by a client device 134 in an example of the immersive lighting system of Fig. 1. At 716, the client device 134 receives sensor samples 308. The sensor 137 may be integrated into the client device 134 or be an accessory to the client device 134. At 719, the client device 134 inputs the sensor samples 308 into a classifier 141. The sensor samples may be inputted as a continuous stream such that the classifier 141 continuously listens to sensor data. Alternatively, the sensor samples 308 are transmitted to the classifier 141 in response to a trigger. The trigger may be, for example, a button, a voice command, or some other user initiated instruction.

At 722, the client device 134 determines a classification 312. The classifier 141 implemented in the client device 134 analyzes the sensor samples 308 to determine the extent that the sensor samples 308 match predefined classifications 312. If a classification 312 can be made, then at 725, the client device 134 determines a control instruction based on the classification 312. For example, the client device 134 maps the classification 312 to a control instruction 212. In this respect, each type of classification corresponds to a control instruction 212.

At 728, the client device 134 transmits the control instruction 212 to a computing system 106. The computing system 106 receives the control instruction 212 and generates a corresponding control signal 605 to control the lighting infrastructure 100 according to the control instruction 212.

Fig. 7b is a flowchart illustrating an example of the functionality performed by a computing system 106 in an embodiment of the immersive lighting system of Fig. 1. Fig. 7b shows an embodiment that implements an immersive group lighting experience. At 745, the computing system 106 receives classifications 312 from a plurality of client devices 134. Classifications 312 may be stored as group behavior data 118. Each classification represents, on an individual level, a particular sensor pattern.

When analyzing an aggregation of sensor patterns, the computing system may generate a corresponding control signal 605. At 748, the computing system determines whether a threshold amount of classifications are exceeded. For example, if the number of a particular type of classification 312 exceeds a threshold number or percentage (compared to other received types of classifications), then, at 751, the computing system 106 determines a corresponding control signal 605. The control signal includes an instruction indicating the way the lights in a lighting infrastructure 100 should be controlled. At 755, the computing system 106 transmits the control signal to the lighting infrastructure.

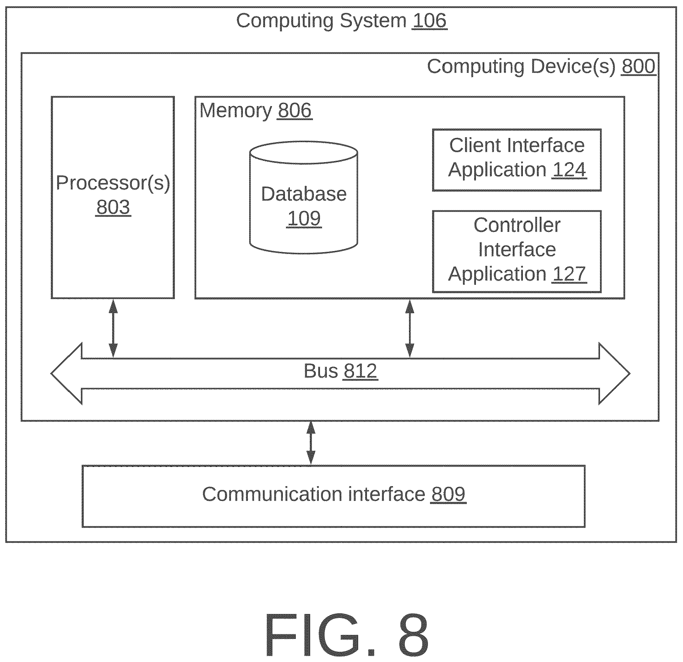

Fig. 8 schematically shows an embodiment of a computing system 106 in the immersive lighting system of Fig. 1. The computing system 106 includes one or more computing devices 800. Each computing device 800 includes at least one processor circuit, for example, having a processor 803, a memory 806, and a communication interface 809, each of which are coupled to a local interface 812 or bus. Each computing device 800 may comprise, for example, at least one server computer or like device. The communication interface 809 may include hardware, such as, for example, a network interface card, a modem, a transceiver, or radio and/or may include software such as, for example, a software module that encodes/decodes communication packets for transmission and receipt. The local interface 812 may comprise, for example, a data bus 812 with an accompanying address/control bus or other bus structure as can be appreciated.

Stored in the memory 806 are both data and several components that are executable by the processor 803. In particular, stored in the memory 806 and executable by the processor 803 is the client interface application 124 and the controller interface application 127. Also stored in the memory 806 may be a database 109 and other data. In addition, an operating system may be stored in the memory 806 and executable by the processor 803.

The communication interface 809 is configured to communicate with the lighting controller 103 and a plurality of client devices 134. The processor 803 uses the communication interface to establish communication with components external to the computing system 106. For example, the processor 803 may send instructions to the communication interface 809 to cause the transmission of data to the lighting controller 103 or client devices 134. Similarly, data received from the communication interface 809 is forwarded to the processor 803.

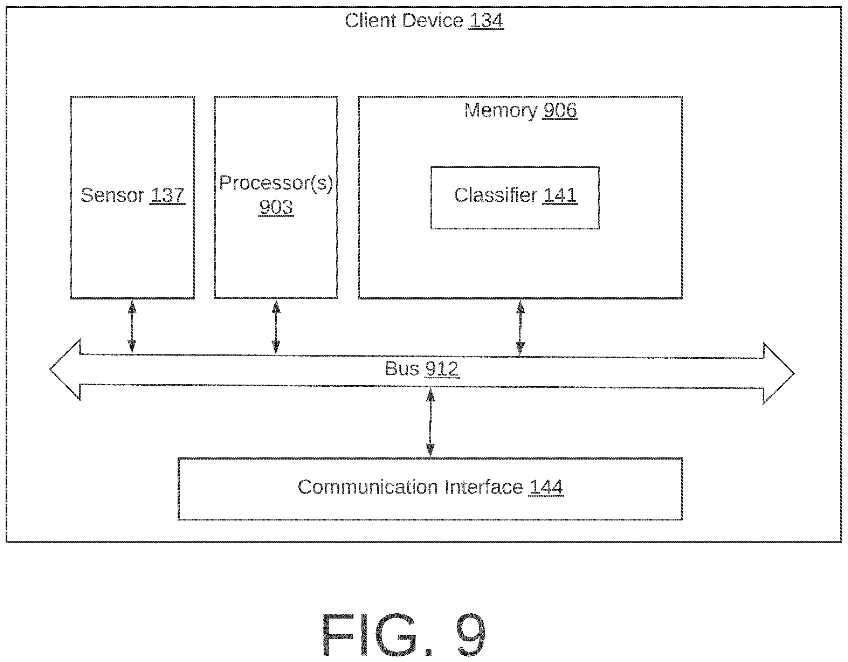

Fig. 9 schematically shows an embodiment of a client device 134 in the immersive lighting system of Fig. 1. The client device 134 includes a processor(s) 903, a memory 906, and a communication interface 144, each of which are coupled to a local interface 912 or bus. The client device 134 further includes a sensor 137 that may be a wired, wireless, or integrated component with respect to the client device 134.

The communication interface 144 may include hardware, such as, for example, a network interface card, a modem, a transceiver, or radio and/or may include software such as, for example, a software module that encodes/decodes communication packets for transmission and receipt. The local interface 912 may comprise, for example, a data bus with an accompanying address/control bus or other bus structure as can be appreciated.

Stored in the memory 906 are both data and several components that are executable by the processor 903. In particular, stored in the memory 906 and executable by the processor 903 is the classifier 141. In addition, an operating system or firmware may be stored in the memory 906 and executable by the processor 903.

The communication interface 144 is configured to communicate with the computing system 106. The processor 903 uses the communication interface to establish communication with components external to the computing system 106. For example, the processor 903 may send instructions to the communication interface 144 to cause the transmission of a control instruction 212 or classification 312. Similarly, data received from the communication interface 144 is forwarded to the processor 903.

With respect to both Fig. 8 and Fig, 9, it is understood that there may be other applications that are stored in the memory 806, 906 and are executable by the processor 803, 906 as can be appreciated. Where any component discussed herein is implemented in the form of software, any one of a number of programming languages may be employed, such as, for example, C, C++, C#, Objective C, Java^{®}, JavaScript^{®}, Perl, PHP, Visual Basic^{®}, Python^{®}, Ruby, Flash^{®}, or other programming languages.

Several software components are stored in the memory 806, 906 and are executable by the processor 803, 903. In this respect, the term "executable" means a program file that is in a form that can ultimately be run by the processor 803, 903. Examples of executable programs may be, for example, a compiled program that can be translated into machine code in a format that can be loaded into a random access portion of the memory 806, 906 and run by the processor 803, 903, source code that may be expressed in proper format such as object code that is capable of being loaded into a random access portion of the memory 806, 906 and executed by the processor 803, 903, or source code that may be interpreted by another executable program to generate instructions in a random access portion of the memory 806, 906 to be executed by the processor 803, 903, *etc.* An executable program may be stored in any portion or component of the memory 806, 906 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 806, 906 is defined herein as including both volatile and nonvolatile memory and data storage components. Volatile components are those that do not retain data values upon loss of power. Nonvolatile components are those that retain data upon a loss of power. Thus, the memory 806, 906 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 803, 903 may represent multiple processors 803, 903 and/or multiple processor cores and the memory 806, 906 may represent multiple memories 806, 906 that operate in parallel processing circuits, respectively. In such a case, the local interface 812, 912 may be an appropriate network that facilitates communication between any two of the multiple processors 803, 903, between any processor 803, 903 and any of the memories 806, 906, or between any two of the memories 806, 906, *etc.* The local interface 812, 912 may comprise additional systems designed to coordinate this communication, including, for example, performing load balancing. The processor 803, 903 may be of electrical or of some other available construction.

Although the software applications or programs as described herein may be embodied in software or code executed by general purpose hardware as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits (ASICs) having appropriate logic gates, field-programmable gate arrays (FPGAs), or other components, etc. Such technologies are generally well known by those skilled in the art and, consequently, are not described in detail herein.

The foregoing detailed description has set forth a few of the many forms that the invention can take. The above examples are merely illustrative of several possible embodiments of various aspects of the present invention, wherein equivalent alterations and/or modifications will occur to others skilled in the art upon reading and understanding the present invention and the annexed drawings. In particular, in regard to the various functions performed by the above described components (devices, systems, and the like), the terms (including a reference to a "means") used to describe such components are intended to correspond, unless otherwise indicated to any component such as hardware or combinations thereof, which performs the specified function of the described component (i.e., that is functionally equivalent), even though not structurally equivalent to the disclosed structure which performs the function in the illustrated implementations of the disclosure.

Furthermore, references to singular components or items are intended, unless otherwise specified, to encompass two or more such components or items. Also, to the extent that the terms "including", "includes", "having", "has", "with", or variants thereof are used in the detailed description and/or in the claims, such terms are intended to be inclusive in a manner similar to the term "comprising".

The present invention has been described with reference to the preferred embodiments. However, modifications and alterations will occur to others upon reading and understanding the preceding detailed description. It is intended that the present invention be construed as including all such modifications and alterations. It is only the claims, including all equivalents that are intended to define the scope of the present invention.

In the claims references in parentheses refer to reference signs in drawings of exemplifying embodiments or to formulas of embodiments, thus increasing the intelligibility of the claim. These references shall not be construed as limiting the claim.

## Claims

1. A lighting infrastructure control system for controlling a lighting infrastructure (100) comprising:
- a plurality of mobile client devices (134), each mobile client device (134) adapted to be carried by a user and configured to communicate with a computing system (106), the computing system being configured for sending a control signal to a lighting controller (103) being configured for controlling the lighting infrastructure (100), each mobile client device comprising:
a processor (903);
a sensor (137);
a communication interface (144) configured to communicate with a computing system (106); and
a memory (906) configured to store computer instructions, which, when executed, cause the processor to receive sensor samples (308) from the sensor (137), classify a subset of the sensor samples to generate a classification (312) of the sensor samples, and transmit the classification (312) to the computing system (106);
- the computing system (106) adapted to communicate with each of the plurality of mobile client devices (134) to receive a plurality of classifications (312) from the plurality of mobile client devices (134), select a classification type among the received plurality of classifications (312) based on a relative frequency or a threshold amount of said classification type occurring in said received plurality of classifications (312), and send the control signal to the lighting controller (103) in accordance with the classification type; and
- the lighting controller (103) adapted to communicate with the computing system (106) for receiving the control signal for controlling the lighting infrastructure (100) and control the lighting infrastructure (100).

2. The lighting infrastructure control system of claim 1, where the classification corresponds to a classification type among a plurality of classification types.

3. The lighting infrastructure control system of claim 1, wherein the sensor of each of the plurality of mobile client devices (134) comprises a motion sensor, wherein the sensor samples (308) comprise acceleration samples or gyroscope samples from the motion sensor, and wherein the classification comprises a motion classification specifying a type of motion.

4. The lighting infrastructure control system of claim 1, wherein the sensor of each of the plurality of mobile client devices (134) is a wireless accessory of the mobile client device (134).

5. The lighting infrastructure control system of claim 1, wherein the plurality of client devices (134) comprises a wristwatch.

6. The lighting infrastructure control system of claim 1, wherein the computer instructions stored in the memory (906) of the plurality of mobile client devices (134) comprise a long short term memory, LSTM, classifier comprising a plurality of cells, each cell configured to receive a corresponding sensor sample from the subset of sensor samples.

7. The lighting infrastructure control system of claim 6, wherein the computer instructions, when executed, cause the processor to analyze an output of the LSTM classifier to generate probability scores for a respective classification types of a plurality of classification types, the probability score for a classification type indicating how likely it is that the subset of the sensor samples falls within said respective classification type.

8. The lighting infrastructure control system of any one of the preceding claims, wherein the computing system (106) comprises a database (109) configured for storing user accounts (112) comprising information to authenticate and authorize users who wish access for controlling the lighting infrastructure, session data (115) comprising information about active sessions established for controlling the lighting infrastructure, group behavior data (118) comprising the received plurality of classifications (312), and a lighting map (120) comprising information for mapping control signals to particular lights or clusters of light of the lighting infrastructure.

9. An immersive lighting system comprising the lighting infrastructure control system of any one of the preceding claims and a lighting infrastructure (100).

10. A computer-implemented method for controlling a lighting infrastructure (100), the method comprising the steps of:
in each of a plurality of mobile computing devices (134), each mobile computing device (134) carried by a user:
receiving (716), by a mobile computing device (134), from a sensor (137) of the mobile client device (134), sensor samples (308);
classifying (719, 722), by the mobile client device (137), a subset of the sensor samples to generate a classification (312) of the sensor samples; and
transmitting, by the mobile client device (137), the classification (312) to the computing system (106),
receiving (745), by the computing system (106), a plurality of classifications (312) from the plurality of mobile client devices (134),
selecting (748), by the computing system (106), a classification type among the received plurality of classifications (312) based on a relative frequency or a threshold amount of said classification type occurring in said received plurality of classifications (312),
determining (751), by the computing device (106), a control signal corresponding to the classification type, and
sending (755), by the computing system (106), the control signal to the lighting controller (103) for controlling the lighting infrastructure (100).

11. The computer-implemented method of claim 10, wherein the step of classifying (719, 722) comprises generating a classification corresponding to a classification type among a plurality of classification types.

12. The computer-implemented method of claim 10, wherein the sensor (137) comprises a motion sensor, and wherein
the step of receiving (716) sensor samples (308) comprises receiving acceleration samples or gyroscope samples from the motion sensor, and
the step of classifying (719, 722) a subset of the sensor samples comprises specifying a type of motion.

13. The computer-implemented method of claim 10, wherein the sensor is a wireless accessory of the mobile client device.

14. The computer-implemented method of claim 10, wherein the steps performed by the mobile computing device (134) are performed in a wristwatch.

15. The computer-implemented method of claim 10, wherein the step of classifying a subset of the sensor samples to generate a classification (312) is performed by a long short term memory, LSTM, classifier comprising a plurality of cells, each cell configured to receive a corresponding sensor sample from the subset of sensor samples and analyzing an output of the LSTM classifier to generate probability scores for a respective classification types of a plurality of classification types, the probability score for a classification type indicating how likely it is that the subset of the sensor samples falls within said respective classification type.

## Patentansprüche

1. Beleuchtungsinfrastruktursteuersystem zum Steuern einer Beleuchtungsinfrastruktur (100), umfassend:
- eine Vielzahl von mobilen Client-Vorrichtungen (134), wobei jede mobile Client-Vorrichtung (134) angepasst ist, um durch einen Benutzer getragen zu werden und konfiguriert ist, um mit einem Rechensystem (106) zu kommunizieren, wobei das Rechensystem zum Senden eines Steuersignals an eine Beleuchtungssteuerung (103) konfiguriert ist, die zum Steuern der Beleuchtungsinfrastruktur (100) konfiguriert ist, jede mobile Client-Vorrichtung umfassend:
einen Prozessor (903);
einen Sensor (137);
eine Kommunikationsschnittstelle (144), die konfiguriert ist, um mit einem Rechensystem (106) zu kommunizieren; und
einen Speicher (906), der konfiguriert ist, um Rechneranweisungen zu speichern, die, wenn sie ausgeführt werden, den Prozessor veranlassen, Sensorabtastwerte (308) von dem Sensor (137) zu empfangen, eine Teilmenge der Sensorabtastwerte zu klassifizieren, um eine Klassifizierung (312) der Sensorabtastwerte zu erzeugen, und die Klassifizierung (312) an das Rechensystem (106) zu übertragen;
- wobei das Rechensystem (106) angepasst ist, um mit jeder der Vielzahl von mobilen Client-Vorrichtungen (134) zu kommunizieren, um eine Vielzahl von Klassifizierungen (312) von der Vielzahl von mobilen Client-Vorrichtungen (134) zu empfangen, eine Klassifizierungsart aus der empfangenen Vielzahl von Klassifizierungen (312) basierend auf einer relativen Häufigkeit oder einem Schwellenbetrag, mit der/dem die Klassifizierungsart in der empfangenen Vielzahl von Klassifizierungen (312) vorkommt, auszuwählen und das Steuersignal an die Beleuchtungssteuerung (103) gemäß der Klassifizierungsart zu senden; und
- wobei die Beleuchtungssteuerung (103) angepasst ist, um mit dem Rechensystem (106) zum Empfangen des Steuersignals zum Steuern der Beleuchtungsinfrastruktur (100) zu kommunizieren und die Beleuchtungsinfrastruktur (100) zu steuern.

2. Beleuchtungsinfrastruktursteuersystem nach Anspruch 1, wobei die Klassifizierung einer Klassifizierungsart aus einer Vielzahl von Klassifizierungsarten entspricht.

3. Beleuchtungsinfrastruktursteuersystem nach Anspruch 1, wobei der Sensor von jeder der Vielzahl von mobilen Client-Vorrichtungen (134) einen Bewegungssensor umfasst, wobei die Sensorabtastwerte (308) Beschleunigungsabtastwerte oder Gyroskopabtastwerte von dem Bewegungssensor umfassen und wobei die Klassifizierung eine Bewegungsklassifizierung, die eine Bewegungsart spezifiziert, umfasst.

4. Beleuchtungsinfrastruktursteuersystem nach Anspruch 1, wobei der Sensor von jeder der Vielzahl von mobilen Client-Vorrichtungen (134) ein drahtloses Zubehör der mobilen Client-Vorrichtung (134) ist.

5. Beleuchtungsinfrastruktursteuersystem nach Anspruch 1, wobei die Vielzahl von Client-Vorrichtungen (134) eine Armbanduhr umfasst.

6. Beleuchtungsinfrastruktursteuersystem nach Anspruch 1, wobei die Rechneranweisungen, die in dem Speicher (906) der Vielzahl von mobilen Client-Vorrichtungen (134) gespeichert sind, einen Long-Short-Term-Memory-Klassifikator, LSTM-Klassifikator, umfassend eine Vielzahl von Zellen, umfassen, wobei jede Zelle konfiguriert ist, um einen entsprechende Sensorabtastwert von der Teilmenge der Sensorabtastwerte zu empfangen.

7. Beleuchtungsinfrastruktursteuersystem nach Anspruch 6, wobei die Rechneranweisungen, wenn sie ausgeführt werden, den Prozessor veranlassen, eine Ausgabe des LSTM-Klassifikators zu analysieren, um Wahrscheinlichkeitsbewertungen für eine jeweilige Klassifizierungsart aus einer Vielzahl von Klassifizierungsarten zu erzeugen, wobei die Wahrscheinlichkeitsbewertung für eine Klassifizierungsart angibt, wie wahrscheinlich es ist, dass die Teilmenge der Sensorabtastwerte unter die jeweilige Klassifizierungsart fällt.

8. Beleuchtungsinfrastruktursteuersystem nach einem der vorstehenden Ansprüche, wobei das Rechensystem (106) eine Datenbank (109) umfasst, die zum Speichern von Benutzerkonten (112) konfiguriert ist, umfassend Informationen, um Benutzer, die Zugriff zum Steuern der Beleuchtungsinfrastruktur wünschen, zu authentifizieren und zu autorisieren, Sitzungsdaten (115), umfassend Informationen über aktive Sitzungen, die zum Steuern der Beleuchtungsinfrastruktur eingerichtet wurden, Gruppenverhaltensdaten (118), umfassend die empfangene Vielzahl von Klassifizierungen (312), und eine Beleuchtungszuordnung (120), umfassend Informationen zum Zuordnen von Steuersignalen zu speziellen Lichtern oder Lichterbündeln der Beleuchtungsinfrastruktur.

9. Immersives Beleuchtungssystem, umfassend das Beleuchtungsinfrastruktursteuersystem nach einem der vorstehenden Ansprüche und eine Beleuchtungsinfrastruktur (100).

10. Rechnerimplementiertes Verfahren zum Steuern einer Beleuchtungsinfrastruktur (100), das Verfahren umfassend die Schritte:
in jedem einer Vielzahl von mobilen Rechenvorrichtungen (134), wobei jede mobile Rechenvorrichtung (134) durch einen Benutzer getragen wird:
Empfangen (716), durch eine mobile Rechenvorrichtung (134), von einem Sensor (137) der mobilen Client-Vorrichtung (134), von Sensorabtastwerten (308);
Klassifizieren (719, 722), durch die mobile Client-Vorrichtung (137), einer Teilmenge der Sensorabtastwerte, um eine Klassifizierung (312) der Sensorabtastwerte zu erzeugen; und
Übertragen, durch die mobile Client-Vorrichtung (137), der Klassifizierung (312) an das Rechensystem (106),
Empfangen (745), durch das Rechensystem (106), einer Vielzahl von Klassifizierungen (312) von der Vielzahl von mobilen Client-Vorrichtungen (134),
Auswählen (748), durch das Rechensystem (106), einer Klassifizierungsart aus der empfangenen Vielzahl von Klassifizierungen (312) basierend auf einer relativen Häufigkeit oder einem Schwellenbetrag, mit der/dem die Klassifizierungsart in der empfangenen Vielzahl von Klassifizierungen (312) vorkommt,
Bestimmen (751), durch die Rechenvorrichtung (106), eines Steuersignals, das der Klassifizierungsart entspricht, und
Senden (755), durch das Rechensystem (106), des Steuersignals an die Beleuchtungssteuerung (103) zum Steuern der Beleuchtungsinfrastruktur (100).

11. Rechnerimplementiertes Verfahren nach Anspruch 10, wobei der Schritt des Klassifizierens (719, 722) das Erzeugen einer Klassifizierung, die einer Klassifizierungsart aus einer Vielzahl von Klassifizierungsarten entspricht, umfasst.

12. Rechnerimplementiertes Verfahren nach Anspruch 10, wobei der Sensor (137) einen Bewegungssensor umfasst und wobei
der Schritt des Empfangens (716) von Sensorabtastwerten (308) das Empfangen von Beschleunigungsabtastwerten oder Gyroskopabtastwerten von dem Bewegungssensor umfasst und
der Schritt des Klassifizierens (719, 722) einer Teilmenge der Sensorabtastwerte ein Spezifizieren einer Bewegungsart umfasst.

13. Rechnerimplementiertes Verfahren nach Anspruch 10, wobei der Sensor ein drahtloses Zubehör der mobilen Client-Vorrichtung ist.

14. Rechnerimplementiertes Verfahren nach Anspruch 10, wobei die Schritte, die durch die mobile Rechenvorrichtung (134) durchgeführt werden, in einer Armbanduhr durchgeführt werden.

15. Rechnerimplementiertes Verfahren nach Anspruch 10, wobei der Schritt des Klassifizierens einer Teilmenge der Sensorabtastwerte, um eine Klassifizierung (312) zu erzeugen, durch einen Long-Short-Term-Memory-Klassifikator, LSTM-Klassifikator, durchgeführt wird, umfassend eine Vielzahl von Zellen, wobei jede Zelle konfiguriert ist, um einen entsprechenden Sensorabtastwert von der Teilmenge von Sensorabtastwerten zu empfangen und eine Ausgabe des LSTM-Klassifikators zu analysieren, um Wahrscheinlichkeitsbewertungen für eine jeweilige Klassifizierungsart einer Vielzahl von Klassifizierungsarten zu erzeugen, wobei die Wahrscheinlichkeitsbewertung für eine Klassifizierungsart angibt, wie wahrscheinlich es ist, dass die Teilmenge der Sensorabtastwerte unter die jeweilige Klassifizierungsart fallen.

## Revendications

1. Système de commande d'infrastructure d'éclairage permettant de commander une infrastructure d'éclairage (100) comprenant :
- une pluralité de dispositifs clients mobiles (134), chaque dispositif client mobile (134) étant conçu pour être transporté par un utilisateur et configuré pour communiquer avec un système informatique (106), le système informatique étant configuré pour envoyer un signal de commande à un organe de commande d'éclairage (103) étant configuré pour commander l'infrastructure d'éclairage (100), chaque dispositif client mobile comprenant :
un processeur (903) ;
un capteur (137) ;
une interface de communication (144) configurée pour communiquer avec un système informatique (106) ; et
une mémoire (906) configurée pour stocker des instructions d'ordinateur, qui, lorsqu'elles sont exécutées, amènent le processeur à recevoir des échantillons de capteur (308) en provenance du capteur (137), classifier un sous-ensemble des échantillons de capteur pour générer une classification (312) des échantillons de capteur, et transmettre la classification (312) au système informatique (106) ;
- le système informatique (106) étant conçu pour communiquer avec chacun parmi la pluralité de dispositifs clients mobiles (134) pour recevoir une pluralité de classifications (312) en provenance de la pluralité de dispositifs clients mobiles (134), sélectionner un type de classification parmi la pluralité reçue de classifications (312) en fonction d'une fréquence relative ou d'une quantité seuil dudit type de classification se produisant dans ladite pluralité reçue de classifications (312), et envoyer le signal de commande à l'organe de commande d'éclairage (103) conformément au type de classification ; et
- l'organe de commande d'éclairage (103) étant conçu pour communiquer avec le système informatique (106) pour recevoir le signal de commande permettant de commander l'infrastructure d'éclairage (100) et commander l'infrastructure d'éclairage (100).

2. Système de commande d'infrastructure d'éclairage selon la revendication 1, où la classification correspond à un type de classification parmi une pluralité de types de classification.

3. Système de commande d'infrastructure d'éclairage selon la revendication 1, dans lequel le capteur de chacun parmi la pluralité de dispositifs clients mobiles (134) comprend un capteur de mouvement, dans lequel les échantillons de capteur (308) comprennent des échantillons d'accélération ou des échantillons de gyroscope en provenance du capteur de mouvement, et dans lequel la classification comprend une classification de mouvement spécifiant un type de mouvement.

4. Système de commande d'infrastructure d'éclairage selon la revendication 1, dans lequel le capteur de chacun parmi la pluralité de dispositifs clients mobiles (134) est un accessoire sans fil du dispositif client mobile (134).

5. Système de commande d'infrastructure d'éclairage selon la revendication 1, dans lequel la pluralité de dispositifs clients (134) comprend une montre-bracelet.

6. Système de commande d'infrastructure d'éclairage selon la revendication 1, dans lequel les instructions d'ordinateur stockées dans la mémoire (906) de la pluralité de dispositifs clients mobiles (134) comprennent un classificateur à mémoire longue à court terme, LSTM, comprenant une pluralité de cellules, chaque cellule étant configurée pour recevoir un échantillon de capteur correspondant provenant du sous-ensemble d'échantillons de capteur.

7. Système de commande d'infrastructure d'éclairage selon la revendication 6, dans lequel les instructions d'ordinateur, lorsqu'elles sont exécutées, amènent le processeur à analyser une sortie du classificateur LSTM pour générer des scores de probabilité pour un type de classification respectif d'une pluralité de types de classification, le score de probabilité pour un type de classification indiquant la probabilité que le sous-ensemble des échantillons de capteur se trouve dans ledit type de classification respectif.

8. Système de commande d'infrastructure d'éclairage selon l'une quelconque des revendications précédentes, dans lequel le système informatique (106) comprend une base de données (109) configurée pour stocker des comptes d'utilisateur (112) comprenant des informations pour authentifier et autoriser des utilisateurs qui souhaitent avoir accès pour commander l'infrastructure d'éclairage, des données de session (115) comprenant des informations concernant des sessions actives établies pour commander l'infrastructure d'éclairage, des données de comportement de groupe (118) comprenant la pluralité reçue de classifications (312), et une carte d'éclairage (120) comprenant des informations permettant de mapper des signaux de commande à des lumières ou amas de lumière particuliers de l'infrastructure d'éclairage.

9. Système d'éclairage immersif comprenant le système de commande d'infrastructure d'éclairage selon l'une quelconque des revendications précédentes et une infrastructure d'éclairage (100).

10. Procédé implémenté par ordinateur permettant de commander une infrastructure d'éclairage (100), le procédé comprenant les étapes consistant à :
dans chacun parmi une pluralité de dispositifs informatiques mobiles (134), chaque dispositif informatique mobile (134) étant transporté par un utilisateur :
recevoir (716), par un dispositif informatique mobile (134), en provenance d'un capteur (137) du dispositif client mobile (134), des échantillons de capteur (308) ;
classifier (719, 722), par le dispositif client mobile (137), un sous-ensemble des échantillons de capteur pour générer une classification (312) des échantillons de capteur ; et
transmettre, par le dispositif client mobile (137), la classification (312) au système informatique (106),
recevoir (745), par le système informatique (106), une pluralité de classifications (312) en provenance de la pluralité de dispositifs clients mobiles (134),
sélectionner (748), par le système informatique (106), un type de classification parmi la pluralité reçue de classifications (312) en fonction d'une fréquence relative ou d'une quantité seuil dudit type de classification se produisant dans ladite pluralité reçue de classifications (312),
déterminer (751), par le dispositif informatique (106), un signal de commande correspondant au type de classification, et
envoyer (755), par le système informatique (106), le signal de commande à l'organe de commande d'éclairage (103) pour commander l'infrastructure d'éclairage (100).

11. Procédé implémenté par ordinateur selon la revendication 10, dans lequel l'étape de classification (719, 722) comprend la génération d'une classification correspondant à un type de classification parmi une pluralité de types de classification.

12. Procédé implémenté par ordinateur selon la revendication 10, dans lequel le capteur (137) comprend un capteur de mouvement, et dans lequel
l'étape de réception (716) d'échantillons de capteur (308) comprend la réception d'échantillons d'accélération ou d'échantillons de gyroscope en provenance du capteur de mouvement, et
l'étape de classification (719, 722) d'un sous-ensemble des échantillons de capteur comprend la spécification d'un type de mouvement.

13. Procédé implémenté par ordinateur selon la revendication 10, dans lequel le capteur est un accessoire sans fil du dispositif client mobile.

14. Procédé implémenté par ordinateur selon la revendication 10, dans lequel les étapes mises en œuvre par le dispositif informatique mobile (134) sont mises en œuvre dans une montre-bracelet.

15. Procédé implémenté par ordinateur selon la revendication 10, dans lequel l'étape de classification d'un sous-ensemble des échantillons de capteur pour générer une classification (312) est mise en œuvre par un classificateur à mémoire longue à court terme, LSTM, comprenant une pluralité de cellules, chaque cellule étant configurée pour recevoir un échantillon de capteur correspondant en provenance du sous-ensemble d'échantillons de capteur et analyser une sortie du classificateur LSTM pour générer des scores de probabilité pour un type de classification respectif d'une pluralité de types de classification, le score de probabilité pour un type de classification indiquant la probabilité que le sous-ensemble des échantillons de capteur se trouve dans ledit type de classification respectif.
